# FASCICULE DE BREVET EUROPEEN

(11) **EP 1 087 837 B1**
(45) Date de publication et mention de la délivrance du brevet: **26.11.2003**
(21) Numéro de dépôt: 99923331.5
(22) Date de dépôt: 25.05.1999
(51) Int. Cl.: B01J 19/10, G10K 11/02, B06B 3/00

(54) **REACTEUR A CAVITATION ACOUSTIQUE**
REAKTOR MIT AKOUSTISCHER KAVITATION
REACTOR WITH ACOUSTIC CAVITATION

(30) Priorité: 26.05.1998 CA 2238951
(43) Date de publication de la demande: 04.04.2001
(73) Titulaire: Sonertec Inc., Trois-Rivières-Ouest, Québec G8Z 4M5 (CA)
(72) Inventeur: DION, Jean-Luc, Trois-Rivières-Ouest, Québec G8Y 3P2 (CA); AGBOSSOU, Kodjo, Trois-Rivières-Ouest, Québec G8Y 4P4 (CA)
(74) Mandataire: Jolly, Jean-Pierre
(86) Numéro de dépôt international: CA9900480
(87) Numéro de publication internationale: WO99061149

(56) Documents cités:
- WO-A-98/49671
- US-A- 4 369 100
- US-A- 5 214 343
- US-A- 5 658 534

## Description

### CHAMP DE L'INVENTION

La présente invention se rapporte d'une façon générale aux dispositifs et procédés servant au traitement physico-chimique des matériaux, et porte plus particulièrement sur un réacteur à cavitation acoustique apte à utiliser des ultrasons et une cavitation acoustique pour le traitement physico-chimique en continu de matériaux fluides, en boucle fermée ou en boucle ouverte.

### HISTORIQUE

Les techniques antérieures de traitement physico-chimique de divers liquides et mélanges liquides par cavitation acoustique dans une gamme de fréquences allant d'environ 100 Hz à quelques dizaines de kilohertz sont bien connues. Ces traitements se font dans des réacteurs à cavitation acoustique qui sont généralement de deux types: les réacteurs pour cuvée, avec ou sans circulation externe, et les réacteurs à circulation externe continue en boucle ouverte ou en boucle fermée. Les fréquences inférieures à 20 kHz sont généralement dites « sonores », et celles supérieures à 20 kHz sont dites « ultrasonores ». Ci-après, on écrira indifféremment « réacteur ultrasonore » ou « réacteur à cavitation acoustique », quelle que soit la fréquence de fonctionnement. D'une façon générale, dans ces réacteurs ultrasonores, il y a production d'un champ acoustique intense au moyen de sources électroacoustiques couplées au volume liquide à traiter qui se trouve dans une enceinte appropriée. Ces sources sont généralement de type piézoélectrique ou de type magnétostrictif.

Quand l'intensité acoustique produite dans le liquide dépasse un certain seuil qui dépend de la nature du liquide, de la température, de la pression et des gaz en solution, il y a production spontanée de bulles de cavitation en quelques microsecondes. Or, l'implosion de ces bulles produit un phénomène d'une extrême violence appelé « cavitation acoustique ». Au sein des bulles de cavitation, la température peut largement dépasser 5000 K, et l'implosion produit des ondes de choc sphériques dont la pression acoustique peut être supérieure à 1000 atmosphères. Ces conditions microscopiques extrêmes sont la cause des phénomènes physico-chimiques qui se produisent à proximité: fragmentation des particules, nettoyage et érosion des surfaces, rupture des molécules, formation de radicaux libres, accélération des réactions chimiques, etc. Les applications chimiques ou « sonochimiques » de la cavitation acoustiques ont fait l'objet de nombreuses publications, dont des ouvrages de synthèse comme, par exemple: « Practical Sonochemistry - User's guide to applications in chemistry and chemical engineering » par T.J. Mason, Ellis Horwood, Chichester, R.U., 1991.

Dans tous les réacteurs antérieurs, d'une façon générale, l'intensité acoustique est maximale à la surface même des sources ou transducteurs, ou à la surface interne du réacteur couplé à ces sources. L'activité de cavitation acoustique est la plus intense sur ces surfaces et décroît rapidement avec l'éloignement. C'est le cas, par exemple, dans le réacteur du brevet US 4,556,467 (Kuhn et al.), ou dans celui du brevet US 5,484,573 (Berger et al.). Cet effet indésirable est particulièrement présent dans tous les réacteurs utilisant des tiges vibrantes ou pistons ou « cornes » de faible section (quelques cm², de diamètre très inférieur à la longueur d'onde du son dans le liquide), plongés dans le liquide à traiter: dans ce cas, le volume où se produit la cavitation acoustique intéressante est réduit à quelques centimètres cubes seulement.

Selon les principes bien connus de la diffraction acoustique, les transducteurs coniques de la technique antérieure décrite dans le brevet US 4,333,796 (Flynn), ne peuvent ainsi que produire la cavitation au voisinage de leur surface étroite, et non pas au centre du réacteur comme on le prétend. Le brevet US 4,556,467 (Kuhn et al.) décrit un dispositif servant au traitement en continu de liquides avec des particules en suspension circulant entre des plaques vibrantes parallèles. Toutefois, dans ce dernier dispositif, la cavitation acoustique se produit avec le maximum d'intensité directement sur les surfaces métalliques internes des plaques, ce qui est un inconvénient important comme il est discuté plus loin. Le brevet US 5,384,508 (Vaxelaire) décrit un réacteur à cavitation acoustique comportant un tube métallique de section circulaire où peut circuler un liquide, avec des transducteurs piézoélectriques disposés à intervalles réguliers le long du tube. Ces transducteurs induisent la résonance longitudinale du tube dont la longueur est sensiblement un multiple entier d'un quart de longueur d'onde du son dans le matériau du tube. Il s'ensuit que la pression acoustique varie périodiquement le long du tube et qu'elle est sensiblement constante dans une section transversale. De cette façon, l'intensité de cavitation acoustique est maximale seulement en certaines zones espacées d'une demi-longueur d'onde le long du tube. Dans ce cas également, la cavitation acoustique se produit sur la surface interne du tube, ce qui est indésirable. Le brevet US 4,016,436 (Shoh) décrit un dispositif très semblable au précédent, avec sensiblement les mêmes désavantages.

Dans toutes ces techniques antérieures, la cavitation acoustique a pour effet de détruire graduellement la surface des transducteurs ou des réacteurs. De plus, les particules résultant de cette destruction peuvent se combiner de façon indésirable aux réactifs chimiques traités par cavitation.

### SOMMAIRE

Un objet de la présente invention est de proposer un réacteur à cavitation acoustique, dans lequel les défauts majeurs des dispositifs de l'art sont essentiellement absents.

Un objet subsidiaire de la présente invention est de proposer un réacteur à cavitation acoustique, apte à effectuer un traitement en continu d'importants volumes de fluide en circulation à des débits très variables comparativement aux méthodes et dispositifs de l'art.

Un autre objet subsidiaire de la présente invention est de proposer un réacteur à cavitation acoustique qui ne cause pas une destruction graduelle des parois du tube dans lequel circule le liquide à traiter.

Le réacteur à cavitation acoustique, selon l'invention, comporte un tube fait de matériau souple. Le tube a une paroi extérieure, une paroi intérieure définissant un conduit, et des extrémités opposées pourvues respectivement d'orifices d'entrée et de sortie communiquant avec le conduit. Des transducteurs électroacoustiques sont distribués de façon radiale et équilibrée autour du tube. Chaque transducteur électroacoustique est en forme de barre prismatique ayant une base d'une largeur déterminée et une tête plus étroite que la base, laquelle tête s'appuie sur le tube. Chaque transducteur électroacoustique inclut un moteur électroacoustique monté à la base de sorte que des vibrations générées par le moteur électroacoustique sont amplifiées à la tête par la forme du transducteur électroacoustique. Des films de lubrifiant s'étendent entre les têtes des transducteurs électroacoustiques et le tube, de manière à produire un couplage acoustique des transducteurs électroacoustiques au tube.

Dans un premier mode de fonctionnement, le réacteur à cavitation acoustique, selon l'invention, permet de produire une zone cylindrique de cavitation acoustique intense dans le liquide en circulation dans le tube, centrée sur l'axe principal du tube, et dont le rayon peut être inférieur au rayon interne du tube, le rayon de cette zone de cavitation augmentant avec l'intensité du courant d'excitation des transducteurs électroacoustiques.

Dans un deuxième mode de fonctionnement, le réacteur à cavitation acoustique, selon l'invention, permet de produire une zone cylindrique de turbulence et de brassage intense dans le liquide en circulation dans le tube, centrée sur l'axe principal du tube, l'intensité du brassage augmentant avec l'intensité du courant d'excitation des transducteurs électroacoustiques, avec relativement peu de cavitation acoustique.

De préférence, le tube, les transducteurs électroacoustiques et les films de lubrifiant sont disposés dans une enceinte pouvant être étanche, dans laquelle la pression peut être maintenue à une valeur déterminée par rapport à celle dans le tube.

De préférence, chaque transducteur électroacoustique comprend une barre solide de section prismatique régulière servant à l'amplification des vibrations dont la face longitudinale à la tête s'appuie sur le tube. La barre amplificatrice peut présenter une distribution de fentes ou de trous transversaux s'étendant dans un plan radial par rapport au tube.

De préférence, la tête de chaque transducteur électroacoustique présente une surface concave épousant substantiellement la paroi extérieure du tube, de même qu'un évasement face au tube.

De préférence, le moteur électroacoustique de chaque transducteur électroacoustique comprend un résonateur piézoélectrique ou magnétostrictif fixé à la barre amplificatrice à la base du transducteur électroacoustique. De préférence, les transducteurs électroacoustiques sont fixés aux côtés d'une structure polygonale formée de deux couronnes disposées aux extrémités du tube et s'étendant respectivement au-dessus et en dessous des transducteurs électroacoustiques.

L'enceinte peut être ceinturée d'un radiateur périphérique et/ou échangeur de chaleur communiquant avec un ensemble de conduites de distribution de lubrifiant et de buses dans l'enceinte.

### DESCRIPTION BRÈVE DES DESSINS

Une description détaillée des réalisations préférées de l'invention sera donnée ci-après en référence aux dessins suivants, dans lesquels les mêmes numéros font référence à des éléments identiques ou similaires:
- figure 1 est une coupe longitudinale partielle d'un réacteur selon l'invention;
- figure 2 est une coupe transversale partielle d'un réacteur selon l'invention, montrant la disposition de transducteurs électroacoustiques autour du tube;
- figures 3, 4 et 5 sont des vues de dessus montrant respectivement des réalisations d'un transducteur électroacoustique avec résonateur piézoélectrique, selon l'invention;
- figure 6 est une coupe transversale partielle d'un réacteur selon l'invention, montrant le système de refroidissement et la structure polygonale supportant les transducteurs électroacoustiques dans l'enceinte;
- figures 7A et 7B sont respectivement une coupe transversale et une vue longitudinale partielles d'un transducteur électroacoustique selon l'invention, montrant la distribution de trous dans la tête du transducteur électroacoustique;
- figures 8A et 8B sont des vues transversale et longitudinale partielles d'un transducteur électroacoustique avec résonateur magnétostrictif, selon l'invention;
- figure 9 est une coupe transversale d'un réacteur selon l'invention, montrant un système échangeur de chaleur et de circulation de lubrifiant ceinturant l'enceinte;
- figure 10 est une coupe longitudinale partielle d'un réacteur selon l'invention, montrant la barre amplificatrice d'un transducteur électroacoustique avec des fentes;
- figure 11 est une coupe transversale partielle d'un réacteur selon l'invention, montrant le système échangeur de chaleur et radiateur;
- figure 12 est un diagramme schématique montrant une déformation typique et exagérée d'un transducteur électroacoustique dans son plan transversal en deux phases de sa déformation;
- figure 13 est un graphique représentant un spectre d'impédance électrique d'un transducteur électroacoustique selon l'invention;
- figure 14 est une vue en perspective d'un transducteur électroacoustique avec résonateur piézoélectrique selon l'invention; et
- figure 15 est un diagramme schématique montrant une manière d'exciter les transducteurs électroacoustiques du réacteur selon l'invention.

### DESCRIPTION DÉTAILLÉE DES RÉALISATIONS PRÉFÉRÉES

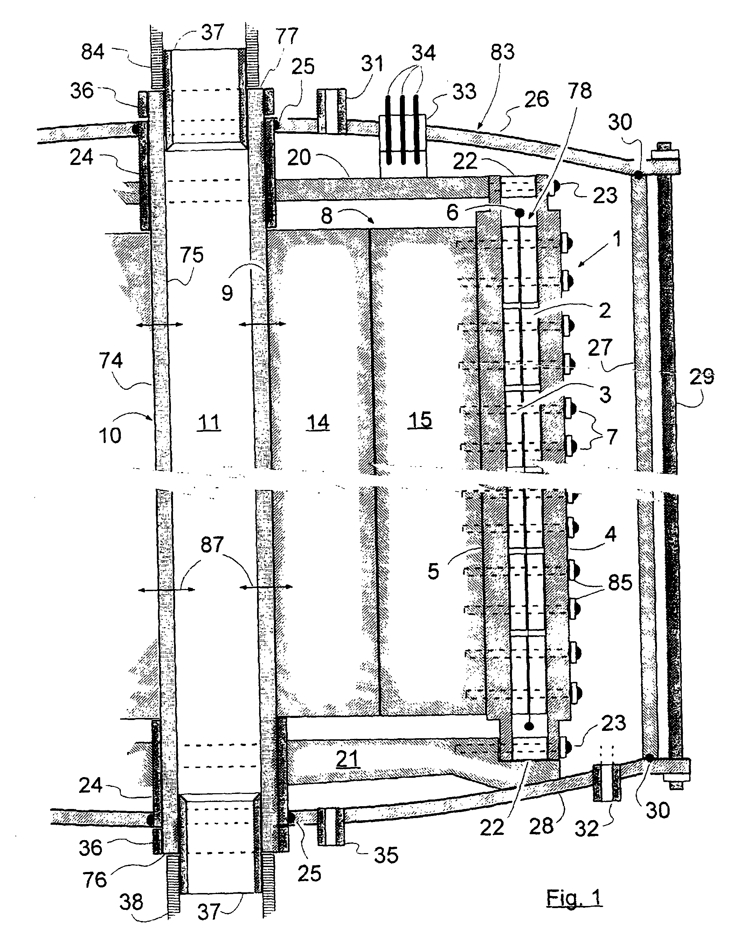

En référence à la figure 1, il est montré un réacteur à cavitation acoustique, selon l'invention. Le réacteur comprend un tube allongé 10 fait de matériau souple. Le tube 10 a une paroi extérieure 74, une paroi intérieure 75 définissant un conduit destiné à recevoir un liquide à traiter en circulation, et des extrémités opposees pourvues respectivement d'orifices d'entrée et de sortie 76, 77 communiquant avec le conduit.

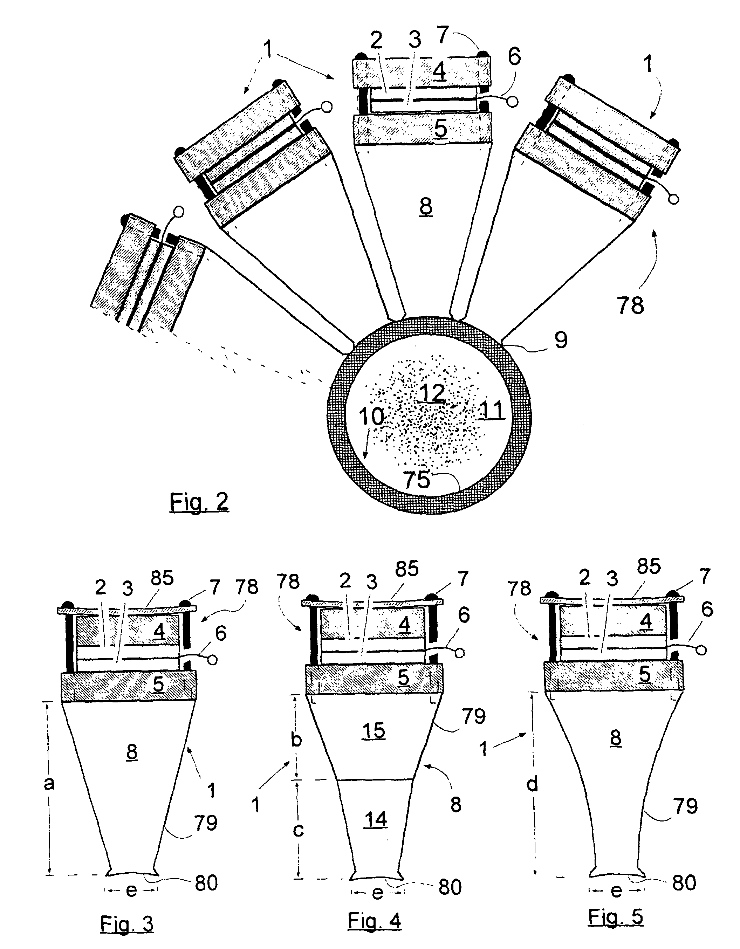

En référence aussi à la figure 2, le réacteur comprend des transducteurs électroacoustiques 1 distribués de façon radiale et régulière autour du tube 10. Chaque transducteur électroacoustique 1 est de forme prismatique régulière ou symétrique ayant une base d'une largeur déterminée et une tête plus étroite que la base, la tête s'appuyant sur le tube 10. Chaque transducteur électroacoustique 1 inclut un moteur électroacoustique 78 monté à la base de sorte que des vibrations générées par le moteur électroacoustique 78 soient amplifiées à la tête par la forme du transducteur électroacoustique 1. Dans un des modes de fonctionnement de l'invention, la vibration en phase des transducteurs 1 produit dans le liquide en circulation dans le tube 10 des ondes acoustiques cylindriques convergentes qui peuvent induire la cavitation acoustique dans une zone cylindrique concentrique au tube 10, cette cavitation pouvant être maintenue à l'écart de la paroi interne 75 du tube 10 en fonction du courant d'excitation des transducteurs électroacoustiques 1. Dans un autre mode de fonctionnement de l'invention, la vibration des transducteurs 1 avec une phase qui varie d'une façon déterminée d'un transducteur 1 à l'autre ou d'un groupe de transducteurs 1 à l'autre produit dans le liquide en circulation dans le tube 10 des ondes acoustiques qui se superposent pour créer une zone cylindrique où le déplacement acoustique en tous points est sensiblement elliptique, ce qui a pour effet de produire une turbulence ou un brassage du liquide.

Le réacteur comprend des films de lubrifiant 9 entre les têtes des transducteurs électroacoustiques 1 et le tube 10, de manière à produire un couplage acoustique des transducteurs électroacoustiques 1 au tube 10.

Chaque transducteur électroacoustique 1 comprend une barre amplificatrice solide 8 de forme également prismatique régulière. La forme de la barre 8 est telle qu'il se produit une amplification de la vitesse acoustique des vibrations allant du moteur électroacoustique 78 vers le tube 10 et donc une meilleure adaptation de l'impédance acoustique du transducteur 1 à celle présentée par la surface 74 du tube 10.

En référence à la figure 3, la barre amplificatrice 8 peut avoir des parois latérales 79 rectilignes entre la base et la tête, formant un rétrécissement vers le tube 10. La barre amplificatrice 8 peut alors être fait d'un solide homogène.

En référence à la figure 4, la barre amplificatrice 8 peut avoir des parois latérales 79 entre la base et la tête formant des rétrécissements successivement moins prononcés vers le tube 10. Dans cette variante, la barre amplificatrice 8 peut présenter des sections longitudinales avant et arrière 14, 15 faites de matériaux différents pour réaliser un meilleur couplage acoustique entre les transducteurs électroacoustiques 1 et le tube 10 avec le liquide 11. Typiquement mais non limitativement, le matériau de la section arrière 15 aura une impédance acoustique supérieure à celle du matériau de la section avant 14, comprise entre celle de la section avant 14 et celle des éléments du moteur électroacoustique 78.

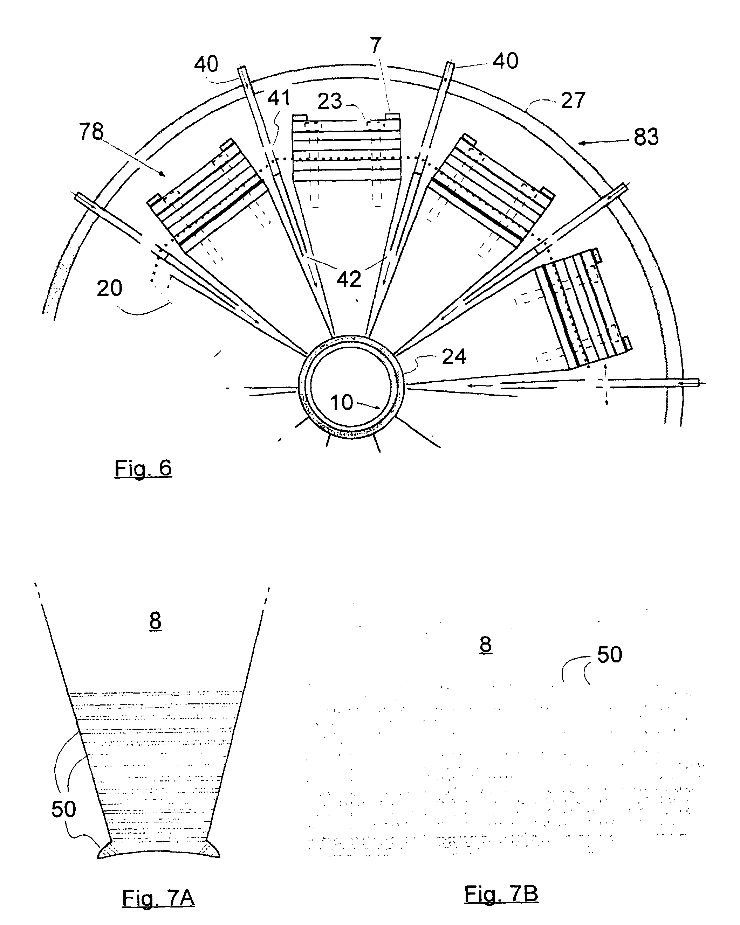

En référence à la figure 5, la barre amplificatrice 8 peut avoir des parois latérales 79 concaves entre la base et la tête, formant un rétrécissement vers le tube 10. Les parois latérales 79 peuvent emprunter un profil sensiblement exponentiel, tel qu'illustré. Cette réalisation de la barre amplificatrice 8 peut généralement produire un couplage supérieur avec le tube 10 et le liquide 11.

En référence aux figures 2 à 5, la tête de chaque transducteur électroacoustique 1 présente de préférence une surface concave 80 épousant substantiellement la paroi extérieure 74 du tube 10. La surface concave 80 a dans le cas illustré une courbure égale à celle du tube 10 de façon à s'y appliquer fermement. De préférence, la tête de chaque transducteur électroacoustique 1 présente un évasement face au tube 10.

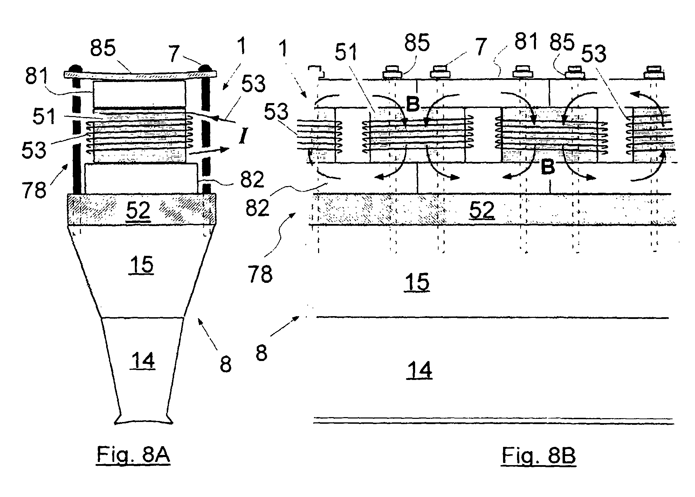

En référence également aux figures 8A, 8B, 10 et 14, chaque transducteur électroacoustique 1 peut comporter un nombre de plaquettes ou languettes ou ressorts incurvés de maintien 65 fixés à la barre amplificatrice 8 et s'appuyant sur le centre du moteur électroacoustique 78. Les plaquettes ou ressorts de maintien 85 peuvent être en acier et fixés à la barre amplificatrice 8 par des éléments de fixation 7 tels des boulons ou vis, afin d'assurer la solidité et le couplage acoustique de l'ensemble. L'utilisation de telles plaquettes ou ressorts de maintien 85 est particulièrement appropriée lorsque les barres 4, 5, les éléments moteurs 2, 3, 6 et le barre ampliticatrice 8 sont solidement fixés au moyen de couches de colle entre eux, ou encore sont séparés par des couches de substance graisseuse entre eux. De plus, l'utilisation de telles plaquettes ou ressorts de maintien 85 a pour avantage de réduire la masse arrière du moteur électroacoustique 78 du fait que la dimension de la barre 4 est alors réduite (comparativement à la réalisation illustrée à la figure 2), et aussi d'augmenter la fréquence de résonance des transducteurs électrcacoustiques 1 si cela est souhaitable.

En référence aux figures 7A et 7B, la partie avant ou étroite de la barre amplificatrice 8, incluant la tête et qui est en contact avec le tube 10, peut comporter une distribution de trous transversaux 50 s'étendant dans des plans radiaux par rapport au tube 10 dans le but de réduire l'impédance acoustique effective de cette partie. Ceci a pour effet de permettre un meilleur couplage acoustique du transducteur 1 au tube 10.

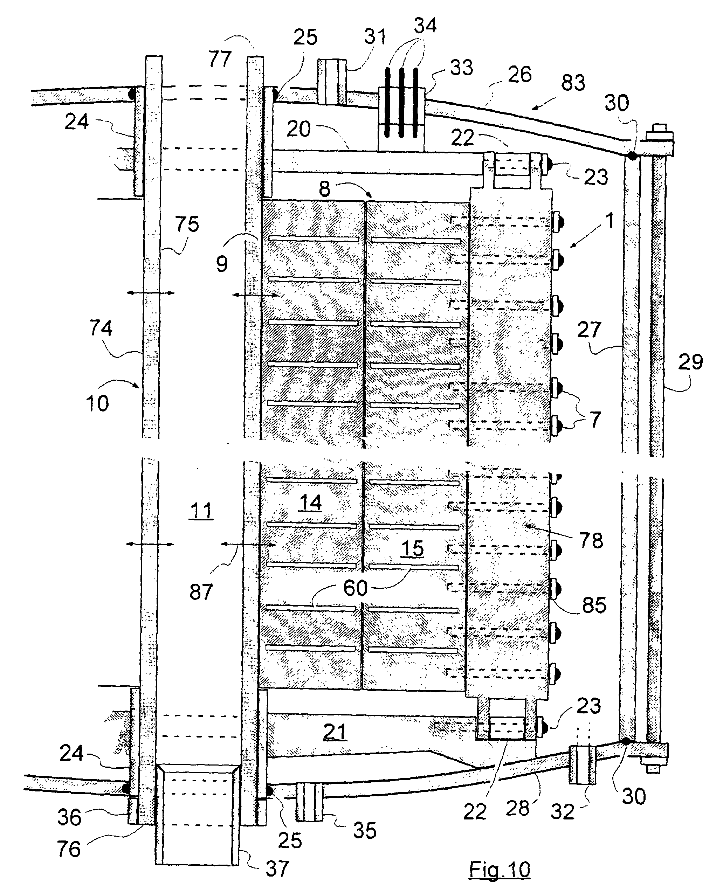

En référence à la figure 10, la barre amplificatrice 8 peut comporter une distribution de fentes 60 transversales s'étendant dans des plans radiaux par rapport au tube 10. Les fentes 60 sont de préférence fines et sensiblement équidistantes les unes des autres à travers la barre amplificatrice 8. Ces fentes 60 ont pour fonction de supprimer, par découplage de modes, certains modes supérieurs de vibration indésirables, ou des modes de flexion dans un plan de symétrie du module comme par exemple le plan illustré dans la figure.

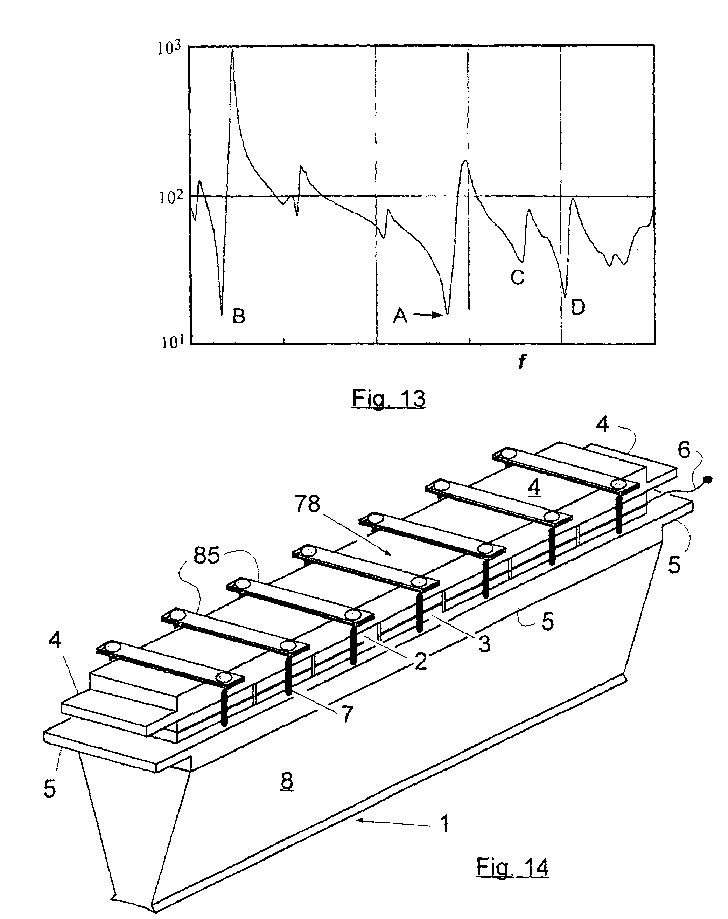

En référence aux figures 1 et 14, le moteur électroacoustique 78 de chaque transducteur électroacoustique 1 peut prendre la forme d'un résonateur piézoélectrique, par exemple de type Langevin, fixé à la barre amplificatrice 8 à la base du transducteur électroacoustique 1. Le résonateur piézoélectrique comprend deux rangées d'éléments piézoélectriques 2, 3 entre lesquelles s'étend une électrode centrale 6. Le nombre de ces éléments piézoélectriques peut être quelconque. Les deux rangées 2, 3 et l'électrode centrale 6 sont intercalées entre deux électrodes latérales 4, 5 électriquement interconnectées ensemble (non illustré). L'électrode centrale 6 peut être formée d'une feuille métallique, et les électrodes latérales 4, 5 peuvent être formées par des barres métalliques reliées solidement par des vis ou boulons 7 sur la barre amplificatrice 8 dont la tête est appliquée fermement au tube 10 par l'intermédiaire d'un film 9 de lubrifiant tel de l'huile, un hydrocarbure ou toute autre substance lubrifiante. Typiquement, les éléments piézoélectriques 2, 3 sont des céramiques ferroélectriques, et les barres 4, 5 sont en acier. La barre amplificatrice 8 est typiquement faite d'un matériau ayant une impédance acoustique inférieure à celle des barres 4, 5 et des éléments piézoélectriques 2, 3. Dans le cas où la barre amplificatrice 8 est composée de deux sections longitudinales avant et arrière 14, 15 tel qu'illustré à la figure 4 (la section avant 14 incluant la tête du transducteur et la section arrière étant fixée à la base du transducteur), et que les sections 14, 15 sont faites de matériaux différents, alors la section avant 14 aura de préférence une impédance acoustique inférieure à la section arrière 15.

En référence aux figures 8A et 8B, le moteur électroacoustique 78 de chaque transducteur électroacoustique 1 peut prendre la forme d'un moteur magnétostrictif fixé à la barre amplificatrice 8 à la base du transducteur électroacoustique 1. Le moteur magnétostrictif comprend un circuit magnétique incluant des éléments magnétostrictifs 51 autour desquels se trouve un bobinage d'excitation 53. En opération, un flux magnétique de densité B circulant dans le circuit magnétique est produit par le bobinage d'excitation 53 (formé par des enroulements d'un fil conducteur) portant un courant alternatif I. Les éléments magnétostrictifs 51 sont de préférence des céramiques magnétostrictives, et le circuit magnétique comprend par exemple des barres 81, 82 de céramiques ferromagnétiques de perméabilité magnétique élevée, entre lesquelles les céramiques magnétostrictives sont intercalées. Les barres 81, 82 peuvent aussi être par exemple en céramique magnétostrictive. De manière alternative, le circuit magnétique peut être constitué d'un empilement longitudinal de lamelles (non illustré) faites par exemple d'un alliage d'acier ferromagnétique et magnétostrictif disposées de façon à ce que le flux magnétique circule parallèlement aux lamelles. En opération, la fréquence du courant alternatif appliqué au bobinage d'excitation 53 sera de préférence égale à la moitié de celle du mode de vibration préféré du transducteur électroacoustique 1.

En référence aux figures 1, 6, 9, 10 et 11, le réacteur comprend une structure polygonale de fixation composée de deux couronnes 20, 21 s'étendant respectivement au-dessus et en dessous des transducteurs électroacoustiques 1, et ayant des côtés auxquels les bases des transducteurs électroacoustiques 1 sont fixées, par exemple, par des boulons 23, de sorte que les transducteurs électroacoustiques 1 présentent une configuration concentrique autour du tube 10. Les couronnes 20, 21 sont centrées sur le tube 10 par des brides 24 fixées autour du tube 10. Les barres 4, 5 ont des extrémités entre lesquelles sont intercalées des cales 22. Les extrémités des barres 4, 5 sont amincies comparativement à une épaisseur générale des barres 4, 5 et respectivement fixées aux côtés des couronnes 20, 21. Un avantage de cet amincissement des extrémités des barres 4, 5 est la réduction des pertes d'énergie acoustique vers les couronnes 20, 21, du fait que les barres 4, 5 sont des lieux de vibration acoustique relativement plus faible qu'aux autres points des transducteurs 1. Un autre avantage de cet arrangement est qu'il permet l'enlèvement et la réinstallation faciles des transducteurs 1 pouvant alors être aisément démontés pour remplacer leurs composants si nécessaire. Bien que cet arrangement soit avantageux, il importe de mentionner que tout autre arrangement approprié peut tout aussi bien être utilisé.

Le nombre de transducteurs électroacoustiques 1 est typiquement compris entre 4 et 16, mais il peut aussi être inférieur ou supérieur selon les besoins.

En référence aux figures 1 et 10, le réacteur comprend de préférence une enceinte 83 délimitant un espace intérieur d'un espace extérieur, et dans laquelle le tube 10, les transducteurs acoustiques 1 et les films de lubrifiant 9 sont disposés, les extrémités du tube 10 communiquant avec l'espace extérieur, afin de pouvoir les raccorder à des conduites d'amenée et de sortie 38, 84 du fluide à traiter par le réacteur. Les conduites 38, 84 sont, en pratique, reliées à un circuit de circulation extérieur (non illustré). Le tube 10 s'étend de préférence dans un axe central de l'enceinte 83, bien qu'il peut être orienté et disposé différemment si nécessaire.

Préférablement, l'enceinte 83 est étanche et partiellement remplie d'un liquide à partir duquel les films de lubrifiant 9 sont constitués, le liquide étant propre à refroidir les transducteurs électroacoustiques 1 et le tube 10 lorsque le réacteur est en opération. L'enceinte 83 peut comporter des ouvertures ou raccords d'entrée et de sortie 32, 35 du liquide entre l'espace extérieur et l'espace intérieur. L'ouverture 32 sert à l'admission du liquide lubrifiant, hydrocarbure ou autre, qui sert à produire les films 9 de couplage acoustique, ainsi qu'à refroidir les transducteurs électroacoustiques 1. L'ouverture 35 sert à l'évacuation du liquide qui circule en circuit fermé entre un échangeur de chaleur extérieur (non illustré) et l'ouverture d'entrée 32. L'enceinte 83 peut comporter également une ouverture ou raccord 31 entre l'espace extérieur et l'espace intérieur, raccordable à un dispositif externe (non illustré) d'ajustement et de maintien d'une pression dans l'enceinte 83, cette pression pouvant être inférieure ou supérieure à la pression atmosphérique. Ainsi, la différence de pression entre le liquide 11 circulant dans le tube 10 et le fluide dans l'enceinte 83 peut être contrôlée. Le maintien d'une pression positive dans le tube 10 relativement à celle dans l'enceinte 83 contribue à maintenir le contact entre le tube 10 et les transducteurs 1, évitant ainsi l'affaissement du tube 10 et assurant un couplage acoustique maximal.

L'enceinte 83 comprend de préférence un bloc-connecteur étanche 33 entre l'espace extérieur et l'espace intérieur, ayant des conducteurs 34 électriquement connectés aux moteurs électroacoustiques 1 (connexions non illustrées), les alimentant ainsi en courant électrique alternatif afin de les faire vibrer.

L'enceinte 83 peut être formée d'une paroi latérale cylindrique 27 et des couvercles supérieur et inférieur 26, 28 fixés à la paroi latérale 27 sur et sous celle-ci. Les couvercles 26, 28 ont des centres comprenant des brides 24 coaxiales recevant respectivement les extrémités du tube 10. Les parois 26, 27, 28 peuvent être métalliques, et fixées ensemble par des barres de fixation 29 disposées autour de l'enceinte 83. L'étanchéité de l'enceinte 83 est assurée d'une part par des joints d'étanchéité 30 intercalés entre les couvercles 26, 28 et la paroi latérale 27 et par, d'autre part, des joints d'étanchéité 25 entre les brides 24 et les couvercles 26, 28.

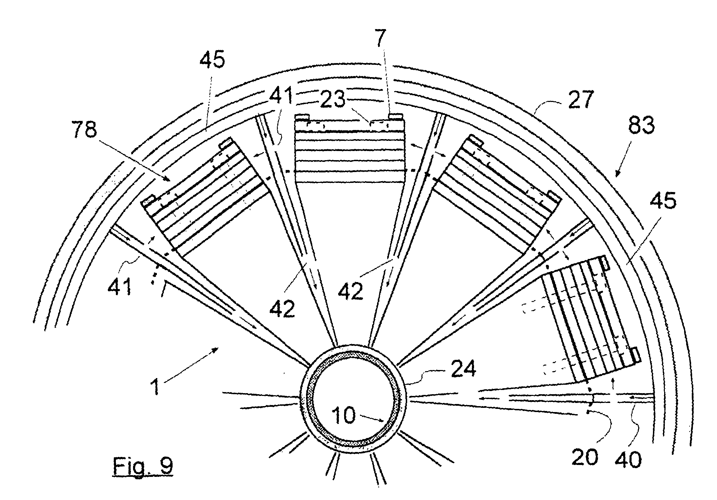

En référence à la figure 9, l'enceinte 83 est pourvue d'un ensemble de conduites périphériques de distribution 45 dans l'espace intérieur raccordées à l'ouverture d'entrée 32 (voir la figure 1) pour recevoir le liquide de refroidissement et de couplage, et de buses 41 couplées aux conduites 45 et se projetant entre les transducteurs électroacoustiques 1 vers le tube 10. Les buses 40 ont des orifices de sortie 41, 42 du liquide qui est ainsi projeté sur les transducteurs électroacoustiques 1 et particulièrement vers le tube 10 entre les transducteurs 1. De façon alternative, les conduites périphériques 45 peuvent être disposées à l'extérieur de l'enceinte 83, les buses 40 passant alors à travers la paroi latérale 27 de l'enceinte 83 tel qu'illustré à la figure 6.

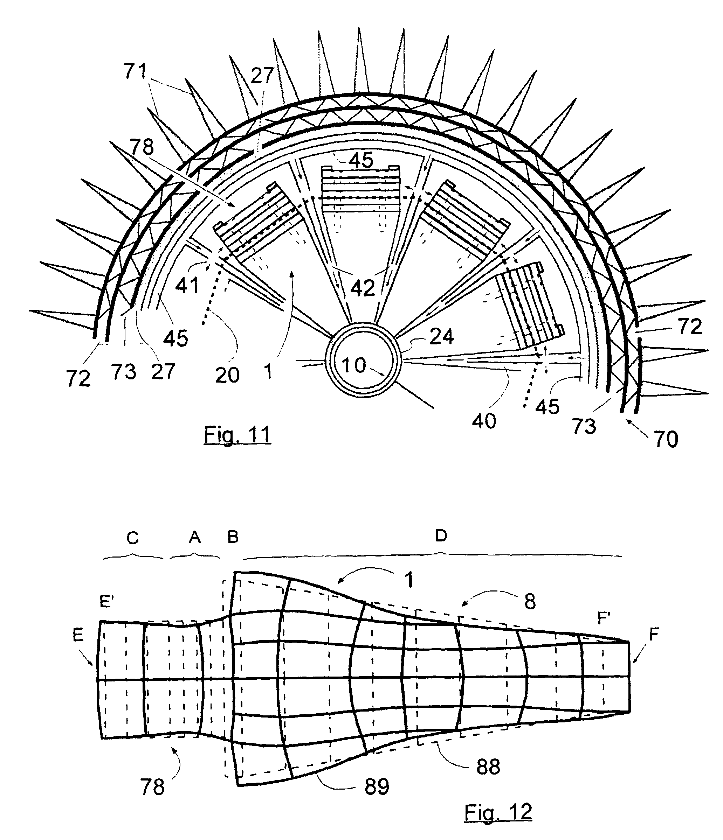

En référence à la figure 11, l'enceinte 83 peut être ceinturée d'un échangeur de chaleur / radiateur périphérique 70 donnant sur l'espace extérieur. L'échangeur de chaleur peut comprendre un compartiment intérieur 73 adjacent à l'enceinte 83, dans lequel peut circuler un liquide refroidi extérieurement au réacteur, et un compartiment extérieur 72 adjacent au compartiment intérieur 73, dans lequel peut circuler le liquide de refroidissement et de couplage utilisé dans l'enceinte 83, la circulation étant forcée par un dispositif externe conventionnel (non illustré). Le compartiment extérieur 72 est alors raccordé aux conduites périphériques de distribution 45 (raccordement non illustré), ou encore peut être directement raccordé aux buses 40, le compartiment 72 agissant alors en quelque sorte comme conduite périphérique de distribution. Le radiateur peut comporter des ailettes 71 distribuées autour de l'enceinte 83 et se projetant dans l'espace extérieur, améliorant ainsi l'efficacité du radiateur pour le transfert de l'énergie thermique interne vers l'air ambiant.

En référence à la figure 1, le tube 10 de matériau souple est maintenu étroitement, de façon étanche, entre les brides 24, les têtes (faces étroites) des transducteurs électroacoustiques 1 et des bagues 37 servant à raccorder le tube 10 aux conduites 38, 84. Des collets de serrage 36 permettent de fixer le tube 10 sur les bagues 37. Le tube 10 est fait de préférence d'un matériau non résonnant, par exemple d'un matériau polymérique résistant tel que divers types de fluorocarbones (TFE, PTFE, etc.), avec ou sans renforcement ou matrice en fibres de verre, en fibres de graphite ou en mica.

En référence aux figures 1 à 5, en opération, une tension électrique alternative de fréquence typiquement comprise entre 10 et 500 kHz est appliquée entre l'électrode centrale 6 et les barres métalliques 4, 5, de façon à ce que les éléments moteurs piézoélectriques 2, 3 subissent des dilatations et contractions alternatives à l'une des fréquences de résonance des transducteurs électroacoustiques 1 dans la direction illustrée par les flèches 87. La fréquence du courant est choisie de façon telle que les transducteurs électroacoustiques 1 vibrent dans un de leurs modes supérieurs de vibration où l'extension de leur tête (partie étroite) appliquée au tube 10 central est maximale et beaucoup plus élevée que celle de leur base (partie arrière et opposée). Les dimensions des transducteurs électroacoustiques 1 sont choisies de façon à ce que la fréquence de résonance de chaque transducteur 1 dans la direction 87 ne coïncide pas avec celle d'un mode supérieur de résonance longitudinale du transducteur 1 (dans la direction de son axe principal).

Les vibrations radiales par rapport au tube 10 sont amplifiées en allant des éléments moteurs 2, 3, 4, 5 ou 51, 81, 82 vers le tube 10. Cette particularité des transducteurs 1 sera décrite plus en détail ci-après, en référence aux figures 12 et 13. Le déplacement acoustique .................................. radial à la surface 75 du tube 10 peut étre ainsi très supérieur à celui des éléments moteurs 2, 3, et des éléments passifs 4, 5 ou 51, 81, 82, et produire des ondes acoustiques cylindriques de grande intensité convergeant vers le centre du tube 10 dans le fluide 11 en circulation dans un sens ou dans l'autre. Au cours de la progression des ondes dans le liquide 11, vers le centre du tube 10, le seuil de cavitation est atteint sur une surface cylindrique plus ou moins éloignée de la paroi interne 75 du tube 10. La figure 2 montre la zone de cavitation 12 à l'écart de la paroi 75 dans laquelle se produisent les réactions physico-chimiques d'intérêt pratique. La création d'une zone de cavitation très intense de forme cylindrique et de volume relativement important, à l'écart de la paroi 75 du tube 10, est une des particularités qui permet d'éviter la dégradation graduelle du tube 10. Pour qu'il en soit ainsi, la fréquence de fonctionnement doit être telle que la longueur d'onde du son dans le liquide 11 en circulation dans le tube 10 soit égale ou inférieure au diamètre interne du tube 10 central, cette fréquence étant celle du mode de vibration préféré.

En référence à la figure 6, les transducteurs 1 sont fixés par les boulons 23 sur la couronne polygonale 20, centrée sur le tube 10 par la bride 24. Dans cette réalisation, les buses 40 amènent de l'extérieur le liquide de refroidissement et de couplage qui est projeté sur les transducteurs 1 par les orifices 41, 42. Ce liquide est de préférence une huile légère.

En référence à la figure 12, il est montré d'une façon relative, à partir d'une simulation par ordinateur, l'aspect de la déformation d'un transducteur 1 de type piézoélectrique du genre de celui illustré à la figure 3, quand il vibre dans le mode de vibration préféré. La forme au repos est indiquée en traits pointillés 88. La forme au maximum d'extension est indiquée en traits pleins 89. La position au repos de la base (partie arrière) du transducteur 1 est désignée par E', tandis que sa position au maximum d'extension est désignée par E. La position au repos de la tête (partie avant) du transducteur 1, celle qui est appliquée au tube central 10, est désignée par F', tandis que sa position au maximum d'extension est désignée par F. Dans une autre réalisation possible, selon les dimensions du transducteur 1, l'extension maximale de la base ou de la tête pourra être inversée par rapport à celle représentée dans la figure 12; par exemple, la position E peut se trouver à droite de la position E'. Dans tous les cas, on recherchera un mode de vibration ayant une symétrie semblable, laquelle se réalise pour une fréquence donnée en déterminant un ensemble de proportions entre les diverses dimensions des éléments du transducteur 1, sensiblement semblables à celles représentées dans les figures.

En référence à la figure 13, il est montré une forme typique de la variation du module de l'impédance électrique Z d'un transducteur de type piézoélectrique (sur une échelle logarithmique) en fonction de la fréquence f. Le spectre est caractérisé par plusieurs minimums d'impédance tels que A, B, C, D... qui correspondent à des résonances mécaniques du transducteur. Seulement certaines de ces résonances correspondent à des modes de vibration dans le plan radial (fig. 1, 2) pouvant être exploités dans les réalisations préférées de l'invention. D'une façon générale, on préférera le fonctionnement dans un mode supérieur tel que A, correspondant à une déformation semblable à celle décrite dans la figure 12. Il importe généralement qu'un tel mode A soit le plus éloigné possible en fréquence des modes adjacents comme celui désigné par C ou d'autres aux fréquences inférieures.

La figure 14 montre en perspective une réalisation préférée du transducteur électroacoustique 1 comportant des éléments piézoélectriques 2, 3, entre des barres métalliques 4, 5 agissant comme électrodes, fortement pressées sur les éléments piézoélectriques 2, 3 au moyen de plaquettes élastiques incurvées en acier 85 retenues par des fixations 7. L'ensemble des éléments 2, 3, 4, 5 formant le moteur électroacoustique 78 est fixé sur la barre amplificatrice 8. Cette figure montre bien les extrémités plus minces des barres 4, 5 qui sont fixées sur les couronnes polygonales 20, 21 (figure 1). Ces barres 4, 5 sont amincies aux extrémités de façon à diminuer leur rigidité aux extrémités et que l'énergie acoustique transmise aux couronnes polygonales 20, 21 soit réduite. Les éléments 2, 3, 4, 5 peuvent évidemment être remplacés par les circuits magnétiques magnétostrictifs 51, 53, 81, 82 tels qu'illustrés à la figure 8.

En référence à la figure 1, en somme, en opération, les transducteurs 1 sont excités par des courants électriques en phase, de sorte que les déplacements acoustiques produits à la surface 75 du tube 10 sont essentiellement en phase, produisant ainsi une vibration radiale très uniforme de la paroi du tube 10. On produit ainsi des ondes acoustiques cylindriques convergeant vers le centre du tube 10 dans le fluide 11 en circulation. L'intensité des ondes dans le fluide 11 augmente rapidement en progressant vers le centre du tube 10 et atteint le seuil de cavitation pour le fluide 11 à une certaine position entre la paroi 75 et le centre du tube 10. Il s'ensuit une zone de cavitation intense de forme sensiblement cylindrique, concentrique au tube 10, et à l'écart de la paroi 75. Le volume de la zone de cavitation peut dépasser largement la moitié du volume intérieur total du tube 10, ce qui permet le traitement d'importants volumes de fluides en circulation à des débits très variables.

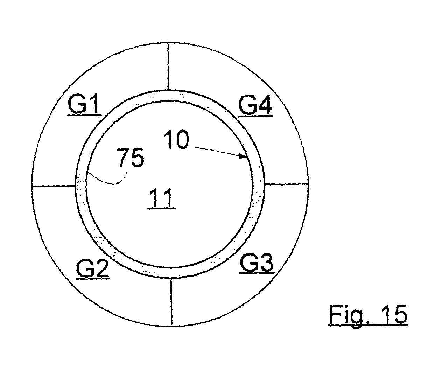

En référence à la figure 15, il est montré un mode d'opération spécial du réacteur selon l'invention, où l'excitation des modules électroacoustiques 1 se fait par des courants alternatifs dont la phase varie d'une façon séquentielle dans différents groupes arbitraires en nombre N de transducteurs tels que G1, G2, G3, G4 autour du tube 10 central, chaque groupe regroupant un même nombre M de transducteurs électroacoustiques 1. Le nombre N de ces groupes n'est pas restreint à quatre; il peut être de deux, trois, cinq, etc. Ainsi, la phase des vibrations acoustiques à la surface 75 du tube 10 variera sensiblement de la même façon d'un groupe à l'autre. Les ondes acoustiques provenant de chaque groupe se superposent alors dans le liquide 11 en produisant des vibrations acoustiques généralement elliptiques dont la distribution complexe favorise le brassage énergique du liquide 11, avec relativement peu de cavitation acoustique. D'une façon typique, la phase du courant d'excitation d'un groupe à l'autre variera progressivement d'une quantité 360/N degrés, sans exclure d'autres possibilités de variation. De cette manière, on peut particulièrement produire une forte agitation dans un mélange de liquides non miscibles, ce qui permet leur émulsification efficace.

Bien que des réalisations de l'invention ont été illustrées dans les dessins ci-joints et décrites ci-dessus, il apparaîtra évident pour les personnes versées dans l'art que des changements et des modifications peuvent être apportés à ces réalisations sans s'écarter de l'essence de l'invention. Par exemple, l'enceinte 83 peut être entièrement ou partiellement remplie de liquide. Plusieurs étages de transducteurs 1 peuvent être disposées sur la longueur du tube 10. Les couronnes 20, 21 peuvent prendre d'autres formes ou leur fonction peut être obtenue par l'entremise d'une autre structure. Le tube 10 peut être de forme cylindrique ou avoir la forme d'un polygone régulier ou tout autre forme appropriée. Il en va de même pour bien d'autres aspects du réacteur ci-dessus décrit. Toutes modifications semblables ou variantes sont considérées comme étant dans la portée de l'invention telle que définie par les revendications ci-jointes.

## Revendications

1. Un réacteur à cavitation acoustique, comprenant:
un tube fait de matériau souple, le tube ayant une paroi extérieure, une paroi intérieure définissant un conduit, et des extrémités opposées pourvues respectivement d'orifices d'entrée et de sortie communiquant avec le conduit;
des transducteurs électroacoustiques distribués de façon radiale et régulière autour du tube et s'étendant sur une longueur du tube parallèlement à un axe central longitudinal du tube, chaque transducteur électroacoustique étant en forme de barre prismatique ayant une base d'une largeur déterminée et une tête plus étroite que la base, chaque transducteur électroacoustique incluant un moteur électroacoustique monté à la base de sorte que des vibrations générées par le moteur électroacoustique soient amplifiées à la tête par la forme du transducteur électroacoustique; et
des films de lubrifiant entre les têtes des transducteurs électroacoustiques et le tube, de manière à produire un couplage acoustique des transducteurs électroacoustiques au tube.

2. Le réacteur selon la revendication 1, dans lequel le tube a un axe central longitudinal, la forme de barre prismatique est symétrique avec un plan de symétrie passant par l'axe central longitudinal du tube, et chaque transducteur électroacoustique s'étend parallèlement à l'axe central longitudinal du tube.

3. Le réacteur selon la revendication 2, dans lequel chaque transducteur électroacoustique comprend une barre amplificatrice de vibration ayant une forme de prisme de section symétrique, un axe longitudinal parallèle à l'axe central longitudinal du tube, un plan de symétrie qui coïncide avec le plan de symétrie du transducteur électroacoustique, une partie étroite et allongée formant la tête du transducteur électroacoustique, et une partie opposée et plus large accolée au moteur électroacoustique.

4. Le réacteur selon la revendication 3, dans lequel la barre amplificatrice de chaque transducteur électroacoustique est un solide ayant la forme de prisme de section symétrique, le solide ayant des faces latérales longitudinales planes entre la base et la tête, convergentes vers la tête, et des faces latérales avant et arrière mutuellement et substantiellement parallèles entre la base et la tête, les faces latérales avant et arrière étant substantiellement perpendiculaires à un plan bissecteur des faces latérales longitudinales.

5. Le réacteur selon la revendication 3, dans lequel la barre amplificatrice de chaque transducteur électroacoustique a des faces latérales longitudinales concaves entre la base et la tête, formant un rétrécissement vers le tube, et des faces latérales avant et arrière mutuellement et substantiellement parallèles entre la base et la tête, les faces latérales avant et arrière étant substantiellement perpendiculaires à un plan de symétrie des faces concaves.

6. Le réacteur selon la revendication 3, dans lequel la barre amplificatrice de chaque transducteur électroacoustique a des faces latérales longitudinales entre la base et la tête, formant des rétrécissements successivement moins prononcés vers le tube, et des faces latérales avant et arrière mutuellement et substantiellement parallèles entre la base et la tête, les faces latérales avant et arrière étant substantiellement perpendiculaires à un plan de symétrie des faces concaves.

7. Le réacteur selon la revendication 1, dans lequel chaque transducteur électroacoustique a des fréquences de résonance de modes supérieurs de résonance longitudinale, et des fréquences de résonance dans un plan transversal différentes des fréquences de résonance des modes supérieure de résonance longitudinale.

8. Le réacteur selon la revendication 3, dans lequel la barre amplificatrice de chaque transducteur électroacoustique a une partie avant incluant la tête, la partie avant ayant une distribution de trous transversaux s'étendant dans des plans transverses par rapport au tube.

9. Le réacteur selon la revendication 3, dans lequel la barre amplificatrice de chaque transducteur électroacoustique comprend une distribution de fentes transversales s'étendant dans des plans perpendiculaires à l'axe central longitudinal du tube.

10. Le réacteur selon la revendication 1, dans lequel la tête de chaque transducteur électroacoustique présente une surface concave épousant substantiellement la paroi extérieure du tube.

11. Le réacteur selon la revendication 1, dans lequel la tête de chaque transducteur électroacoustique présente un évasement face au tube.

12. Le réacteur selon la revendication 3, dans lequel le moteur électroacoustique de chaque transducteur électroacoustique comprend un résonateur piézoélectrique fixé à la barre amplificatrice à la base du transducteur électroacoustique.

13. Le réacteur selon la revendication 12, dans lequel le résonateur piézoélectrique de chaque moteur électroacoustique comprend deux rangées d'éléments piézoélectriques entre lesquelles s'étend une électrode centrale, les deux rangées et l'électrode centrale étant intercalées entre deux électrodes latérales électriquement interconnectées ensemble.

14. Le réacteur selon la revendication 13, dans lequel l'électrode centrale a une forme de feuille métallique, et les électrodes latérales sont en forme de barres métalliques.

15. Le réacteur selon la revendication 13, dans lequel la barre amplificatrice de chaque transducteur électroacoustique est faite d'un matériau ayant une impédance acoustique inférieure à une impédance acoustique des électrodes latérales et des éléments piézoélectriques, et supérieure à une impédance acoustique du matériau dont le tube est fait.

16. Le réacteur selon les revendications 13, dans lequel la barre amplificatrice de chaque transducteur électroacoustique comprend des parties avant et arrière, la partie avant incluant la tête, la partie arrière incluant la base, les parties étant faites de matériaux ayant des impédances acoustiques inférieures à une impédance acoustique des électrodes latérales et des éléments piézoélectriques, l'impédance acoustique de la partie avant étant inférieure à l'impédance acoustique de la partie arrière et supérieure à une impédance acoustique du matériau dont le tube est fait.

17. Le réacteur selon la revendication 13, dans lequel les électrodes sont métalliques, et les éléments piézoélectriques comprennent des céramiques ferroélectriques.

18. Le réacteur selon la revendication 3, dans lequel le moteur électroacoustique de chaque transducteur électroacoustique comprend un résonateur magnétostrictif fixé à la barre amplificatrice à la base du transducteur électroacoustique.

19. Le réacteur selon la revendication 18, dans lequel le résonateur magnétostrictif de chaque moteur électroacoustique comprend un circuit magnétique incluant des éléments magnétostrictifs autour desquels un bobinage d'excitation est enroulé.

20. Le réacteur selon la revendication 19, dans lequel les éléments magnétostrictifs comprennent des céramiques magnétostrictives, et le circuit magnétique de chaque résonateur magnétostrictif comprend des barres de céramiques ferromagnétiques entre lesquelles les céramiques magnétostrictives sont intercalées.

21. Le réacteur selon la revendication 19, dans lequel le circuit magnétique de chaque résonateur magnétostrictif comprend un empilement longitudinal de lamelles faites d'un alliage d'acier ferromagnétique et magnétostrictif.

22. Le réacteur selon la revendication 1, comprenant une structure polygonale de fixation ayant des côtés auxquels les bases des transducteurs électroacoustiques sont fixées, de sorte que les transducteurs électroacoustiques présentent une configuration concentrique autour du tube.

23. Le réacteur selon la revendication 22, dans lequel la structure polygonale comprend deux couronnes s'étendant respectivement au-dessus et en dessous des transducteurs électroacoustiques.

24. Le réacteur selon la revendication 23, dans lequel les couronnes sont centrées sur le tube par des brides fixées autour du tube.

25. Le réacteur selon la revendication 23, dans lequel:
le tube a un axe central longitudinal, la forme de barre prismatique étant symétrique avec un plan de symétrie passant par l'axe central longitudinal du tube, chaque transducteur électroacoustique s'étendant parallèlement à l'axe central longitudinal du tube;
chaque transducteur électroacoustique comprend une barre amplificatrice de vibration ayant une forme de prisme de section symétrique, un axe longitudinal parallèle à l'axe central longitudinal du tube, un plan de symétrie qui coincide avec le plan de synétrie du transducteur électroacoustique, une partie étroite et allongée formant la tête du transducteur électroacoustique, et une partie opposée et plus large accolée au moteur électroacoustique; et
le moteur électroacoustique de chaque transducteur électroacoustique comprend un résonateur en forme de barre fixé à la barre amplificatrice à la base du transducteur électroacoustique, le résonateur comprenant des éléments moteurs intercalés entre deux barres ayant des extrémités entre lesquelles sont intercalées des cales, les extrémités des barres étant amincies comparativement à une épaisseur générale des barres et respectivement fixées aux côtés des couronnes.

26. Le réacteur selon la revendication 3, dans lequel chaque transducteur électroacoustique comprend un nombre de plaquettes incurvées élastiques de maintien fixées à la barre amplificatrice de vibration et s'appuyant sur une partie centrale d'une surface arrière du moteur électroacoustique.

27. Le réacteur selon la revendication 3, dans lequel:
le moteur électroacoustique de chaque transducteur électroacoustique comprend un résonateur incluant des éléments électromoteurs intercalés entre deux barres métalliques fixées à la barre amplificatrice; et
chaque transducteur électroacoustique comprend des couches de colle entre les barres, les éléments électromoteurs et la barre amplificatrice.

28. Le réacteur selon la revendication 3, dans lequel:
le moteur électroacoustique de chaque transducteur électroacoustique comprend un résonateur incluant des éléments électromoteurs intercalés entre deux barres métalliques fixées à la barre amplificatrice; et
chaque transducteur électroacoustique comprend des couches de substance graisseuse entre les barres, les éléments électromoteurs et la barre amplificatrice.

29. Le réacteur selon la revendication 1, dans lequel la paroi intérieure du tube a un diamètre au moins égal à une longueur d'onde d'un son dans un liquide en circulation dans le tube à une fréquence de fonctionnement du réacteur.

30. Le réacteur selon la revendication 1, dans lequel le matériau du tube est non résonant.

31. Le réacteur selon la revendication 1, dans lequel le matériau du tube est polymérique.

32. Le réacteur selon la revendication 1, dans lequel le lubrifiant est une huile ou un hydrocarbure.

33. Le réacteur selon la revendication 1, comprenant une enceinte délimitant un espace intérieur d'un espace extérieur, et dans laquelle le tube, les transducteurs acoustiques et les films de lubrifiant sont disposés, les orifices d'entrée et de sortie des extrémités du tube communiquant avec l'espace extérieur.

34. Le réacteur selon la revendication 33, dans lequel le tube s'étend dans un axe central de l'enceinte.

35. Le réacteur selon la revendication 33, dans lequel l'enceinte est ceinturée d'un radiateur périphérique donnant sur l'espace extérieur.

36. Le réacteur selon la revendication 35, dans lequel le radiateur comprend des ailettes distribuées autour de l'enceinte et se projetant dans l'espace extérieur.

37. Le réacteur selon la revendication 33, dans lequel l'enceinte est étanche et partiellement remplie d'un liquide en circulation à partir duquel les films de lubrifiant sont constitués, le liquide étant propre à refroidir les transducteurs électroacoustiques et le tube lorsque le réacteur est en opération.

38. Le réacteur selon la revendication 37, dans lequel l'enceinte comporte des ouvertures d'entrée et de sortie du liquide entre l'espace extérieur et l'espace intérieur.

39. Le réacteur selon la revendication 38, dans lequel l'enceinte comprend un ensemble de conduites périphériques de distribution dans l'espace intérieur raccordées à l'ouverture d'entrée, et de buses couplées aux conduites et se projetant entre les transducteurs électroacoustiques vers le tube, les buses ayant des orifices de sortie du liquide.

40. Le réacteur selon la revendication 39, dans lequel l'enceinte est entourée d'un échangeur de chaleur communiquant avec les conduites périphériques de distribution.

41. Le réacteur selon la revendication 40, dans lequel l'échangeur de chaleur comprend un compartiment intérieur adjacent à l'enceinte, et un compartiment extérieur adjacent au compartiment intérieur, le compartiment extérieur étant raccordé aux conduites périphériques de distribution.

42. Le réacteur selon la revendication 37, dans lequel l'enceinte comprend une ouverture entre l'espace extérieur et l'espace intérieur, raccordable à un dispositif externe d'ajustement d'une pression dans l'enceinte.

43. Le réacteur selon la revendication 33, dans lequel l'enceinte comprend un bloc-connecteur étanche entre l'espace extérieur et l'espace intérieur, le bloc connecteur ayant des conducteurs électriquement connectés aux moteurs électroacoustiques.

44. Le réacteur selon la revendication 33, dans lequel l'enceinte comprend une paroi latérale cylindrique et des couvercles supérieur et inférieur fixés à la paroi latérale sur et sous la paroi latérale, les couvercles ayant des centres comprenant des brides coaxiales recevant respectivement les extrémités du tube.

45. Le réacteur selon la revendication 44, dans lequel l'enceinte comprend des joints d'étanchéité intercalés entre les couvercles et la paroi latérale.

## Patentansprüche

1. Reaktor mit akustischer Kavitation, bestehend aus:
einem, aus einem nachgiebigen Werkstoff hergestellten Rohr, welches Rohr eine Außenwandung, eine, eine Leitung begrenzende Innenwandung und einander gegenüberliegende Enden, die jeweils mit Eingangs- und Ausgangsöffnungen versehen sind, die mit der Leitung in durchgängiger Verbindung stehen;
elektroakustischen Übertrager, die radial gleichmäßig um das Rohr verteilt angeordnet sind und sich nach Maßgabe einer Länge des Rohres, parallel zu einer Mittellängsachse des Rohres erstrecken, wobei jeder elektroakustische Übertrager die Gestalt einer prismatischen Stange aufweist, die eine Grundfläche mit einer bestimmten Breite und einen Kopf aufweist, der schmaler als die Grundfläche ausgebildet ist, wobei jeder elektroakustische Übertrager einen elektroakustischen Motor umfasst, der an der Grundfläche derart angebracht ist, dass die durch den elektroakustischen Motor erzeugten Schwingungen infolge der Gestalt des elektroakustischen Übertragers an dessen Kopf verstärkt werden und
aus Schmierfilmen zwischen den Köpfen der elektroakustischen Übertrager und dem Rohr, um eine akustische Kopplung der elektroakustischen Übertrager und des Rohres herzustellen.

2. Reaktor nach Anspruch 1, bei welchem das Rohr eine zentrale Längsachse aufweist, wobei die Form des prismatischen Stabes symmetrisch ausgebildet ist, und zwar bezüglich einer Symmetrieebene, welche die zentrale Längsachse des Rohres enthält und wobei jeder elektroakustische Übertrager sich parallel zu der zentralen Längsachse des Rohres erstreckt.

3. Reaktor nach Anspruchs 2, wobei jeder elektroakustische Übertrager eine Verstärkungsstange für die Schwingungen aufweist, welche die Gestalt eines im Schnitt symmetrischen Prismas aufweist, eine Längsachse, die sich parallel zu der zentralen Längsachse des Rohres erstreckt und eine Symmetrieebene, die mit der Symmetrieebene des elektroakustischen Übertragers zusammenfällt, einen schmaleren Teil, der langgestreckt ist und den Kopf des elektroakustischen Übertragers bildet und einen gegenüberliegenden und breiteren Teil, an dem der elektroakustische Motor angebracht ist.

4. Reaktor nach Anspruch 3, wobei die Verstärkungsstange eines jeden elektroakustischen Übertragers ein Festkörper ist, der die Form eines im Schnitt symmetrischen Prismas ausweist, wobei der Festkörper zwischen der Grundfläche und dem Kopf sich in Längsrichtung erstreckende Seitenflächen aufweist, die in Richtung auf den Kopf hin konvergieren und vorderseitige sowie rückseitige Seitenflächen, die zwischen der Grundfläche und dem Kopf im Wesentlichen parallel verlaufen, wobei die vorderseitigen und rückseitigen Flächen sich im Wesentlichen senkrecht zu einer die Längs-Seiten halbierenden Ebene erstrecken.

5. Reaktor nach Anspruch 3, wobei die Verstärkungsstange eines jeden elektroakustischen Übertragers zwischen der Grundfläche und dem Kopf konkave Längsseiten aufweisen, welche zu dem Rohr hin eine Einschnürung bilden sowie vorder- und rückseitige Seitenflächen zwischen der Grundfläche und dem Kopf, die im Wesentlichen parallel zueinander verlaufen, wobei die vorder- und rückseitigen Seitenflächen sich im Wesentlichen senkrecht zu einer Symmetrieebene der konkaven Seiten erstrecken.

6. Reaktor nach Anspruch 3, bei welchem die Verstärkungsstange eines jeden elektroakustischen Übertragers zwischen der Grundfläche und dem Kopf Längsseiten aufweist, welche zu dem Rohr Einschnürungen bilden, die aufeinanderfolgend weniger ausgeprägt sind, wobei die vorderseitigen und rückseitigen Seitenflächen sich im Wesentlichen senkrecht zu einer Symmetrieebene der konkaven Seiten erstrecken.

7. Reaktor nach Anspruch 1, wobei ein jeder elektroakustische Übertrager Resonanzfrequenzen oberhalb der Längsresonanz aufweist und Resonanzfrequenzen in einer Querebene, die sich den Resonanzfrequenzen oberhalb der Längsresonanz unterscheiden.

8. Reaktor nach Anspruch 3, wobei die Verstärkungsstange eines jeden elektroakustischen Übertragers ein vorderes Teil aufweist, das den Kopf mit umfasst, welches eine Verteilung von Querbohrungen aufweist, die sich in Querebenen des Rohres erstrecken.

9. Reaktor nach Anspruch 3, wobei die Verstärkungsstange eines jeden elektroakustischen Übertragers eine Verteilung von Querschlitzen aufweist, die sich in Ebenen senkrecht zur zentralen Längsachse des Rohres erstrecken.

10. Reaktor nach Anspruch 1, wobei der Kopf eines jeden elektroakustischen Übertragers eine konkave Oberfläche aufweist, die sich im Wesentlichen an die Außenwandung des Rohres anpasst.

11. Reaktor nach Anspruch 1, bei welchem der Kopf eines jeden elektroakustischen Übertragers eine Aufweitung auf der Seite des Rohres aufweist.

12. Reaktor nach Anspruch 3, wobei der elektroakustische Motor eines jeden elektroakustischen Übertragers einen piezoelektrischen Resonator umfasst, der an der Verstärkungsstange an der Grundfläche des elektroakustischen Übertragers befestigt ist.

13. Reaktor nach Anspruch 12, bei weichem der piezoelektrische Resonator eines jeden elektroakustischen Motors zwei Reihen piezoelektrischer Elemente umfasst, zwischen denen sich eine Mittelelektrode erstreckt, wobei die beiden Reihen und die Mittelelektrode zwischen zwei seitlichen Elektroden angeordnet sind, die elektrisch verbunden sind.

14. Reaktor nach Anspruch 13, bei welchem die Mittelelektrode als metallisches Blatt vorliegt, wobei die seitlichen Elektroden in der Form metallischer Stangen vorliegen.

15. Reaktor nach Anspruch 13, bei welchem die Verstärkungsstange eines jeden elektroakustischen Übertragers aus einem solchen Werkstoff hergestellt ist, dessen akustische Impedanz geringer als die akustische Impedanz der seitlichen Elektroden und der piezoelektrischen Elemente und höher bemessen ist als die akustische Impedanz des Werkstoffs, aus welchem das Rohr hergestellt ist.

16. Reaktor nach Anspruch 13, bei welchem die Verstärkungsstange eines jeden elektroakustischen Übertragers Vorderseiten und Rückseiten umfasst, wobei die Vorderseite den Kopf einschließt, wobei die Rückseite die Grundfläche einschließt, wobei diese Teile aus Werkstoffen hergestellt sind, deren akustische Impedanz geringer als die akustische Impedanz der seitlichen Elektroden und der piezoelektrischen Elemente bemessen ist, wobei die akustische Impedanz des Vorderteils geringer als die akustische Impedanz des hinteren Teils und größer als die akustische Impedanz des Werkstoffs bemessen ist, aus welchem das Rohr hergestellt ist.

17. Reaktor nach Anspruch 13, bei welchem die Elektroden aus einem Metall bestehen und bei welchem die piezoelektrischen Elemente aus ferroelektrischer Keramik bestehen.

18. Reaktor nach Anspruch 3, bei welchem der elektroakustische Motor eines jeden elektroakustischen Übertragers einen magnetostriktiven Resonator umfasst, der an der Verstärkungsstange an der Grundfläche des elektroakustischen Übertragers befestigt ist.

19. Reaktor nach Anspruch 18, bei welchem der magnetostriktive Resonator eines jeden elektroakustischen Übertragers einen magnetischen Kreis aufweist, der magnetostriktive Elemente umfasst, um welche herum eine Erregerspule gewickelt ist.

20. Reaktor nach Anspruch 19, bei welchem die magnetostriktiven Elemente aus magnetostriktiver Keramik bestehen, wobei der magnetische Kreis eines jeden magnetostriktiven Resonators aus Stangen aus ferromagnetischer Keramik besteht, zwischen welchen die magnetostriktive Keramik angeordnet ist.

21. Reaktor nach Anspruch 19, bei welchem der magnetische Kreis eines jeden magnetostriktiven Resonators einen Längsstapel aus Lamellen umfasst, die aus einer ferromagnetischen und magnetostriktiven Stahllegierung hergestellt sind.

22. Reaktor nach Anspruch 1, bestehend aus einer polygonalen Befestigungsstruktur mit Seiten, an denen die Grundflächen der elektroakustischen Übertrager befestigt sind, und zwar derart, dass die elektroakustischen Übertrager eine sich um das Rohr herum erstreckende konzentrische Anordnung aufweisen.

23. Reaktor nach Anspruch 22, wobei die polygonale Struktur zwei, sich jeweils oberhalb und unterhalb der elektroakustischen Übertrager erstreckende Kappen aufweist.

24. Reaktor nach Anspruch 23, wobei die Kappen mittels Ringelemente, die an dem Rohr befestigt sind, bezüglich des Rohres zentriert sind.

25. Reaktor nach Anspruch 23,
wobei das Rohr eine zentrale Längsachse aufweist, wobei die Form der prismatischen Stange bezüglich einer Symmetrieebene, welche die zentrale Längsachse des Rohres enthält, symmetrisch ausgebildet ist, wobei der elektroakustische Übertrager sich parallel zu der zentralen Längsachse des Rohres erstreckt;
wobei jeder elektroakustische Übertrager eine der zur Schwingungsverstärkung dienende Stange aufweist, welche die Gestalt eines im Schnitt symmetrischen Prismas aufweist, mit einer Längsachse, die sich parallel zur zentralen Längsachse des Rohres erstreckt, mit einer Symmetrieebene, die mit der Symmetrieebene des elektroakustischen Übertragers zusammenfällt, mit einem schmaleren langgestreckten Teil, welches den Kopf des elektroakustischen Übertragers bildet und einem gegenüberliegenden breiteren Teil, an welchem der elektroakustische Motor angebracht ist und
wobei der elektroakustische Motor eines jeden elektroakustischen Übertragers einen Resonator in der Gestalt einer Stange aufweist, die an der Verstärkungsstange an der Grundfläche des elektroakustischen Übertragers befestigt ist, wobei der Resonator motorische Elemente aufweist, die zwischen den Stangen angeordnet sind, welche Endabschnitte aufweisen, zwischen denen sich Keile befinden, wobei die Endabschnitte der Stangen im Vergleich zur allgemeinen Dicke der Stangen dünner ausgebildet sind und jeweils an den Seiten der Stangen befestigt sind.

26. Reaktor nach Anspruch 3, wobei jeder elektroakustische Übertrager eine Anzahl einwärts gekrümmter elastischer Halteplättchen aufweist, die an der, der Schwingungsverstärkung dienenden Stange befestigt sind und welche sich auf einem Mittelabschnitt auf einer hinteren Fläche des elektroakustischen Motors abstützen.

27. Reaktor nach Anspruch 3,
wobei der elektroakustische Motor eines jeden elektroakustischen Übertragers einen Resonator umfasst, der elektromotorische Elemente aufweist, die zwischen den metallischen Stangen angeordnet sind, die an der Verstärkungsstange befestigt sind und
wobei jeder elektroakustische Übertrager Klebstoffschichten zwischen den Stangen, den elektromotorischen Elementen und der Verstärkungsstange aufweist.

28. Reaktor nach Anspruch 3,
wobei der elektroakustische Motor eines jeden elektroakustischen Übertragers einen Resonator umfasst, der elektromotorische Elemente aufweist, die zwischen den beiden metallischen Stangen angeordnet sind, die an der Verstärkungsstange befestigt sind und
wobei der elektroakustische Übertrager Schichten aus einer fettigen Substanz zwischen den Stangen, den elektromotorischen Elementen und der Verstärkungsstange umfasst.

29. Reaktor nach Anspruch 1, wobei die untere Wandung des Rohres einen Durchmesser aufweist, der wenigstens einer Wellenlänge des Schalls in einer Flüssigkeit umfasst, die in dem Rohr zirkuliert und zwar bei einer Betriebsfrequenz des Reaktors.

30. Reaktor nach Anspruch 1, bei welcher der Werkstoff des Rohres sich nicht im Resonanzbereich befindet.

31. Reaktor nach Anspruch 1, bei welchem der Werkstoff des Rohres ein polymerer Werkstoff ist.

32. Reaktor nach Anspruch 1, bei welchem das Schmiermittel ein Öl oder ein Kohlenwasserstoff ist.

33. Reaktor nach Anspruch 1 mit einer Einfassung, welche einen Innenraum gegenüber einem Außenraum abgrenzt und innerhalb welcher das Rohr, die akustischen Übertrager und die Schmierfilme angeordnet sind, wobei die Eingangs- und Ausgangsöffnungen des Rohres mit dem Außenraum in Verbindung stehen.

34. Reaktor nach Anspruch 33, bei welchem sich das Rohr in einer Mittelachse der Einfassung erstreckt.

35. Reaktor nach Anspruch 33, wobei die Einfassung von einem Umfangsstrahler umgeben ist, der dem Außenraum zugekehrt ist.

36. Reaktor nach Anspruch 35, wobei der Strahler Flügel umfasst, die um die Einfassung verteilt sind und die in den Außenraum hineinragen.

37. Reaktor nach Anspruch 33, wobei die Einfassung dicht ist und teilweise mit einer zirkulierenden Flüssigkeit ausgefüllt ist, durch welche Schmiermittelfilme gebildet werden, wobei die Flüssigkeit dazu geeignet ist, die elektroakustischen Übertrager und das Rohr zu kühlen, während der Reaktor sich in Betrieb befindet.

38. Reaktor nach Anspruch 37, bei welchem die Einfassung Öffnungen für den Eintritt und den Austritt der Flüssigkeit zwischen dem Außenraum und dem Innenraum umfasst.

39. Reaktor nach Anspruch 38, bei welchem die Einfassung in dem, sich an die Eintrittsöffnung anschließenden Innenraum eine Gruppe von sich in Umfangsrichtung erstreckenden Verteilerleitungen umfassen, die mit der Eintrittsöffnung in Verbindung stehen und Düsen, die an die Leitung angeschlossen sind und die sich zwischen den elektroakustischen Übertragern in Richtung auf das Rohr hin erstrecken, wobei die Düsen Austrittsöffnungen für die Flüssigkeit aufweisen.

40. Reaktor nach Anspruch 39, bei welchem die Einfassung von einem Wärmetauscher umgeben ist, der mit den, sich in Umfangsrichtung erstreckenden Verteilerleitungen in Verbindung steht.

41. Reaktor nach Anspruch 40, bei welchem der Wärmetauscher eine innere, der Einfassung benachbarte Abteilung und eine äußere, der inneren Abteilung benachbarte Abteilung umfasst, wobei die äußere Abteilung mit den sich in Umfangsrichtung erstreckenden Verteilerleitungen in Verbindung steht.

42. Reaktor nach Anspruch 37, bei welchem die Umfassung eine zwischen dem Außenraum und dem Innenraum gelegene Öffnung umfasst, die mit einer äußeren Anordnung zur Einstellung des Druckes in der Einfassung verbindbar ist.

43. Reaktor nach Anspruch 33, wobei die Einfassung einen zwischen dem Außenraum und dem Innenraum angeordneten dichten Anschlussblock aufweist, wobei der Anschlussblock elektrische Verbindungselemente aufweist, die mit den elektroakustischen Motoren in Verbindung stehen.

44. Reaktor nach Anspruch 33, wobei die Einfassung eine zylindrische Seitenwand und obere sowie untere Deckel umfasst, die auf bzw. unter der Seitenwand befestigt sind, wobei die Deckel mittlere Bereiche mit zu diesen koaxialen Ringelementen umfassen, in denen die jeweiligen Enden des Rohres aufgenommen sind.

45. Reaktor nach Anspruch 44, wobei die Einfassung Dichtungen umfasst, die zwischen den Deckeln und der Seitenwand angeordnet sind.

## Claims

1. An acoustic cavitation reactor, comprising:
a tube made of flexible material, the tube having an outer wall, and inner wall defining a conduit, and opposite ends provided respectively with inlet and outlet openings communicating with the conduit;
electroacoustic transducers radially and uniformly distributed around the tube and extending over a length of the tube in parallel with a longitudinal central axis of the tube, each electroacoustic transducer being in a prismatic bar shape having a base of specific width and a head narrower than the base, each electroacoustic transducer including an electroacoustic motor mounted at the base such that vibrations generated by the electroacoustic motor are amplified at the head by the shape of the electroacoustic transducer; and
films of lubricant between the heads of the electroacoustic transducers and the tube, to produce an acoustic coupling of the electroacoustic transducers with the tube.

2. The reactor according to claim 1, wherein the tube has a longitudinal central axis, the prismatic bar shape is symmetrical with a plane of symmetry crossing the longitudinal central axis of the tube, and each electroacoustic transducer extends parallel to the longitudinal central axis of the tube.

3. The reactor according to claim 2, wherein each electroacoustic transducer comprises a vibration amplifying bar having a shape of a prism of symmetrical section, a longitudinal axis parallel to the longitudinal central axis of the tube, a plane of symmetry which coincides with a plane of symmetry of the electroacoustic transducer, a narrow and elongated portion forming the head of the electroacoustic transducer, and an opposite and larger portion adjoined to the electroacoustic motor.

4. The reactor according to claim 3, wherein the amplifying bar of each electroacoustic transducer is a solid having the shape of the prism of symmetrical section, the solid having flat longitudinal lateral faces between the base and the head, converging toward the head, and mutually and substantially parallel front and rear lateral faces between the base and the head, the front and rear lateral faces being substantially perpendicular to a bisecting plane of the longitudinal lateral faces.

5. The reactor according to claim 3, wherein the amplifying bar of each electroacoustic transducer has concave longitudinal lateral faces between the base and the head, forming a narrowing toward the tube, and mutually and substantially parallel front and rear lateral faces between the base and the head, the front and rear lateral faces being substantially perpendicular to a plane of symmetry of the concave faces.

6. The reactor according to claim 3, wherein the amplifying bar of each electroacoustic transducer has longitudinal lateral faces between the base and the head, forming narrowings successively less pronounced toward the tube, and mutually and substantially parallel front and rear lateral faces between the base and the head, the front and rear lateral faces being substantially perpendicular to a plane of symmetry of the concave faces.

7. The reactor according to claim 1, wherein each electroacoustic transducer has higher mode resonant frequencies of longitudinal resonance, and resonant frequencies in a transversal plane different from the higher mode resonant frequencies of longitudinal resonance.

8. The reactor according to claim 3, wherein the amplifying bar of each electroacoustic transducer has a front portion including the head, the front portion having a distribution of transverse holes extending in transverse planes with respect to the tube.

9. The reactor according to claim 3, wherein the amplifying bar of each electroacoustic transducer comprises a distribution of transverse slots extending in planes perpendicular to the longitudinal central axis of the tube.

10. The reactor according to claim 1, wherein the head of each electroacoustic transducer exhibits a concave surface substantially fitting the outer wall of the tube.

11. The reactor according to claim 1, wherein the head of each electroacoustic transducer exhibits a widening facing the tube.

12. The reactor according to claim 3, wherein the electroacoustic motor of each electroacoustic transducer comprises a piezoelectric resonator secured to the amplifying bar at the base of the electroacoustic transducer.

13. The reactor according to claim 12, wherein the piezoelectric resonator of each electroacoustic motor comprises two rows of piezoelectric elements between which a central electrode extends, the two rows and the central electrode being inserted between two lateral electrodes electrically interconnected together.

14. The reactor according to claim 13, wherein the central electrode has a shape of a metallic sheet, and the lateral electrodes are in a shape of metallic bars.

15. The reactor according to claim 13, wherein the amplifying bar of each electroacoustic transducer is made of a material having an acoustic impedance lower than an acoustic impedance of the lateral electrodes and the piezoelectric elements, and higher than an acoustic impedance of the material in which the tube is made.

16. The reactor according to claim 13, wherein the amplifying bar of each electroacoustic transducer comprises front and rear portions, the front portion including the head, the rear portion including the base, the portions being made of materials having acoustic impedances lower than an acoustic impedance of the lateral electrodes and the piezoelectric elements, the acoustic impedance of the front portion being lower than the acoustic impedance of the rear portion and higher than an acoustic impedance of the material in which the tube is made.

17. The reactor according to claim 13, wherein the electrodes are metallic, and the piezoelectric elements comprise ferroelectric ceramics.

18. The reactor according to claim 3, wherein the electroacoustic motor of each electroacoustic transducer comprises a magnetostrictive resonator secured to the amplifying bar at the base of the electroacoustic transducer.

19. The reactor according to claim 18, wherein the magnetostrictive resonator of each electroacoustic motor comprises a magnetic circuit including magnetostrictive elements around which an energizing coil is wound.

20. The reactor according to claim 19, wherein the magnetostrictive elements comprise magnetostrictive ceramics, and the magnetic circuit of each magnetostrictive resonator comprises ferromagnetic ceramic bars between which the magnetostrictive ceramics are inserted.

21. The reactor according to claim 19, wherein the magnetic circuit of each magnetostrictive resonator comprises a longitudinal stack of plates made of a ferromagnetic and magnetostrictive steel alloy.

22. The reactor according to claim 1, comprising a supporting polygonal structure having sides to which the bases of the electroacoustic transducers are secured, so that the electroacoustic transducers exhibit a concentric configuration around the tube.

23. The reactor according to claim 22, wherein the polygonal structure comprises two rings extending respectively above and below the electroacoustic transducers.

24. The reactor according to claim 23, wherein the rings are centered around the tube by braces mounted around the tube.

25. The reactor according to claim 23, wherein:
the tube has a longitudinal central axis, the prismatic bar shape being symmetrical with a plane of symmetry crossing the longitudinal central axis of the tube, each electroacoustic transducer extending parallel to the longitudinal central axis of the tube;
each electroacoustic transducer comprises a vibration amplifying bar having a shape of a prism of symmetrical section, a longitudinal axis parallel to the longitudinal central axis of the tube, a plane of symmetry which coincides with a plane of symmetry of the electroacoustic transducer, a narrow and elongated portion forming the head of the electroacoustic transducer, and an opposite and larger portion adjoined to the electroacoustic motor; and
the electroacoustic motor of each electroacoustic transducer comprises a resonator in a shape of a bar secured to the amplifying bar at the base of the electroacoustic transducer, the resonator comprising motor elements inserted between two bars having ends between which spacers are inserted, the ends of the bars being thinned down compared to a general thickness of the bars and respectively secured to sides of the rings.

26. The reactor according to claim 3, wherein each electroacoustic transducer comprises a number of elastic incurved retaining plates secured to the vibration amplifying bar and bearing on a central portion of a rear surface of the electroacoustic motor.

27. The reactor according to claim 3, wherein:
the electroacoustic motor of each electroacoustic transducer comprises a resonator including electromotor elements inserted between two metallic bars secured to the amplifying bar; and
each electroacoustic transducer comprises layers of glue between the bars, the electromotor elements and the amplifying bar.

28. The reactor according to claim 3, wherein:
the electroacoustic motor of each electroacoustic transducer comprises a resonator including electromotor elements inserted between two metallic bars secured to the amplifying bar; and
each electroacoustic transducer comprises layers of a grease substance between the bars, the electromotor elements and the amplifying bar.

29. The reactor according to claim 1, wherein the inner wall of the tube has a diameter at least equal to a wavelength of a sound in a liquid flowing in the tube at an operation frequency of the reactor.

30. The reactor according to claim 1, wherein the material of the tube is non-resonant.

31. The reactor according to claim 1, wherein the material of the tube is polymeric.

32. The reactor according to claim 1, wherein the lubricant is oil or an hydrocarbon.

33. The reactor according to claim 1, comprising an enclosure delimiting an inner space from an outer space, and in which the tube, the acoustic transducers and the films of lubricant are disposed, the inlet and outlet openings of the ends of the tube communicating with the outer space.

34. The reactor according to claim 33, wherein the tube extends in central axis of the enclosure.

35. The reactor according to claim 33, wherein the enclosure is surrounded by a peripheral radiator giving over the outer space.

36. The reactor according to claim 35, wherein the radiator comprises fins distributed around the enclosure and projecting in the outer space.

37. The reactor according to claim 33, wherein the enclosure is sealed and partially filled with a liquid in circulation from which the films of lubricant are made of, the liquid being adapted to cool down the electroacoustic transducers in the tube when the reactor is in operation.

38. The reactor according to claim 37, wherein the enclosure comprises inlet and outlet openings for the liquid between the outer space and the inner space.

39. The reactor according to claim 38, wherein the enclosure comprises a set of peripheral distribution conduits in the inner space connected to the inlet opening, and nozzles connected to the conduits and projecting between the electroacoustic transducers toward the tube, the nozzles having outlet openings for the liquid.

40. The reactor according to claim 39, wherein the enclosure is surrounded by a heat exchanger communicating with the peripheral distribution conduits.

41. The reactor according to claim 40, wherein the heat exchanger comprises an inner compartment adjacent to the enclosure, and an outer compartment adjacent to the inner compartment, the outer compartment being connected to the peripheral distribution conduits.

42. The reactor according to claim 37, wherein the enclosure comprises an opening between the outer space and the inner space, connectable to an external device for adjustment of a pressure in the enclosure.

43. The reactor according to claim 33, wherein the enclosure comprises a sealed connector block between the outer space and the inner space, the connector block having conductors electrically connected to the electroacoustic motors.

44. The reactor according to claim 33, wherein the enclosure comprises a cylindrical lateral wall and upper and lower covers secured to the lateral wall over and under the lateral wall, the covers having centers comprising coaxial braces receiving respectively the ends of the tube.

45. The reactor according to claim 44, wherein the enclosure comprises gaskets inserted between the covers and the lateral wall.
